# EUROPÄISCHE PATENTANMELDUNG

(11) **EP 1 099 527 A1**
(43) Veröffentlichungstag der Anmeldung: **16.05.2001**
(21) Anmeldenummer: 99811036.5
(22) Anmeldetag: 11.11.1999
(51) Int. Cl.: B29C 43/36, B29C 43/48, B65D 41/32

(54) **Verfahren und Einrichtung zum Pressformen einer Behälterverschlusskappe**

(71) Anmelder: Crown Cork & Seal Technologies Corporation, Alsip, IL 60803 (US)
(72) Erfinder: Schmitt, Dieter, 4153 Reinach (CH); Stich, Raymond, 68480 Radersdorf (FR)
(74) Vertreter: Hepp, Dieter

(57) **Zusammenfassung**

Hergestellt wird eine Verschlusskappe, welche einen ersten Teil (16, 17) und einen zweiten Teil (18) aufweist, die durch wenigstens einen dünneren Abschnitt (19) miteinander verbunden sind Die Einrichtung enthält eine Matrize (11) und einen Stempel (12), die bezüglich einander bewegbar sind, um zwischen einander einen Formhohlraum einzuschliessen. Ein zusätzlicher Formteil (14) ist nach dem Schliessen des Formhohlraums bezüglich des Formhohlraums bewegbar, um das Volumen des Formhohlraums zu verkleinern, bis der Kunststoff den Formhohlraum vollständig ausfüllt. Damit wird sichergestellt, dass beim Pressformen im Formhohlraum die Verschlusskappe und insbesondere auch der dünnere Abschnitt (19) vollständig in vorgesehener Form ausgebildet werden.

## Beschreibung

Die Erfindung bezieht sich auf ein Verfahren und eine Einrichtung zum Pressformen einer Behälterverschlusskappe, welche einen ersten Teil und einen zweiten Teil aufweist, die durch wenigstens einen dünneren Abschnitt miteinander verbunden sind.

Die Aufgabe der Erfindung besteht darin, das Verfahren und die Einrichtung so zu gestalten, dass gewährleistet ist, dass beim Pressformen in einem Formhohlraum die Verschlusskappe und insbesondere auch der dünnere Abschnitt bzw. die dünneren Abschnitte vollständig in vorgesehener Form ausgebildet werden, ohne dass es dazu erforderlich ist, in den Formhohlraum überschüssigen Kunststoff einzugeben, der dann beim Schliessen des Formhohlraums aus diesem herausgedrückt wird.

Die Aufgabe wird erfindungsgemäss mit dem im Patentanspruch 1 definierten Verfahren bzw. mit der im Patentanspruch 3 definierten Einrichtung gelöst.

Ausführungsbeispiele der Erfindung werden nachstehend anhand der Zeichnungen erläutert. Darin zeigen:
Fig. 1 schematisch eine Matrize und einen Stempel einer Pressformvorrichtung in einem geschlossenen Zustand,
Fig. 2 die Matrize und den Stempel von Fig. 1 in einem Endzustand,
Fig. 3 die Matrize und den Stempel einer anderen Ausführungsform der Pressformvorrichtung in einem geschlossenen Zustand,
Fig. 4 die Matrize und den Stempel von Fig. 3 in einem Endzustand,
Fig. 5 die Matrize und den Stempel einer dritten Ausführungsform der Pressformvorrichtung in einem geschlossenen Zustand und
Fig. 6 die Matrize und den Stempel von Fig. 5 in einem Endzustand.

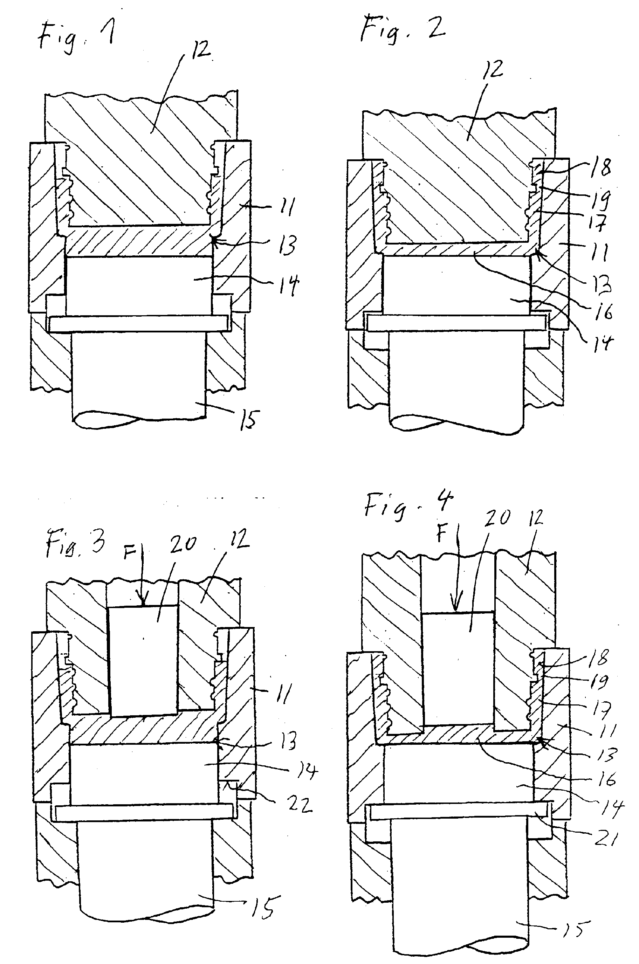

Die Fig. 1 und 2 zeigen schematisch eine Matrize 11 und einen Stempel 12, die bezüglich einander axial bewegbar sind. In einem geöffneten Zustand (nicht dargestellt), in welchem die Matrize 11 und der Stempel 12 voneinander einen Abstand haben, wird in die Matrize eine erweichte, plastische Kunststoffportion eingegeben.

Dann werden die Matrize 11 und der Stempel 12 bezüglich einander durch nicht dargestellte Mittel in die dargestellte geschlossene Stellung bewegt, in der ein Umfangsteil des Stempels auf einem oberen Rand der Matrize aufliegt und die Matrize und der Stempel zwischen einander einen Formhohlraum in der Form einer Behälterverschlusskappe begrenzen. In dem in Fig. 1 gezeigten Zustand füllt der Kunststoff 13 den Formhohlraum noch nicht vollständig aus.

In der Matrize 11 ist ein zusätzlicher Formteil 14 angeordnet, der durch einen Hydraulikkolben 15 bezüglich des Formhohlraums verschiebbar ist, um das Volumen des Formhohlraums zu verkleinern, bis der Kunststoff 13 den Formhohlraum vollständig ausfüllt, wie in Fig. 2 gezeigt. Die in Fig. 2 dargestellte fertige Behälterverschlusskappe besitzt einen ersten Teil in Form eines Bodens 16 und einer von dem Boden ausgehenden Umfangswand 17, einen zweiten Teil in Form eines ringförmigen Elementes 18 und wenigstens einen die beiden Teile miteinander verbindenden dünneren Abschnitt 19. Entsprechend besitzt der Formhohlraum einen ersten Hohlraumteil zum Bilden des ersten Teils 16, 17 der Verschlusskappe, einen zweiten Hohlraumteil zum Bilden des zweiten Teils 18 der Verschlusskappe und einen Hohlraumzwischenteil zum Bilden des dünneren Abschnittes 19.

Nach dem Schliessen des Formhohlraums, im Zustand gemäss Fig. 1, füllt der Kunststoff der eingegebenen Kunststoffportion den ersten Hohlraumteil, der den ersten Teil 16, 17 der Verschlusskappe bildet, in der Regel praktisch vollständig aus, den zweiten Hohlraumteil, der den zweiten Teil 18 der Verschlusskappe bildet, und den Hohlraumzwischenteil, der den dünneren Abschnitt 19 bildet, jedoch nicht oder höchstens teilweise. Beim Bewegen des zusätzlichen Formteils 14 zum Verkleinern des Volumens des Formhohlraums wird dann ein Teil der Kunststoffportion aus dem ersten Hohlraumteil durch den Hohlraumzwischenteil in den zweiten Hohlraumteil gedrückt, bis die Kunststoffportion den ganzen Hohlraum vollständig ausfüllt.

Das ringförmige Element 18 kann beispielsweise ein Garantieband sein, das mit der Umfangswand 17 über einen dünneren Abschnitt 19 in Form einer Sollbruchlinie oder Schwächungslinie verbunden ist, so dass nachher beim Abnehmen der Verschlusskappe von einem Behälter das Garantieband 18 von der Umfangswand 17 getrennt wird. Eine solch Sollbruchlinie 19 ist ein schmaler Bereich, in welchem das Kunststoffmaterial nur dünn ist und gegebenenfalls auch Durchbrechungen aufweist.

Im Ausführungsbeispiel ist der zusätzliche Formteil 14 in der Matrize 11 angeordnet. Ein zusätzlicher Formteil zum Verkleinern des Volumens des Formhohlraums nach dem Schliessen desselben könnte aber mit gleicher Wirkung auch im Stempel 12 statt in der Matrize 11 angeordnet sein.

Die Ausführungsform der Pressformvorrichtung gemäss den Fig. 3 und 4 enthält die gleichen Elemente wie die Vorrichtung gemäss Fig. 1 und 2, und die Elemente sind mit den gleichen Hinweisziffern wie in Fig. 1 und 2 bezeichnet.

Im Unterschied zur Vorrichtung gemäss Fig. 1 und 2 ist in der Vorrichtung gemäss Fig. 3 und 4 im Stempel 12 ein zweiter zusätzlicher Formteil 20 angeordnet. Der zweite zusätzliche Formteil 20 ist im Stempel 12 entgegen der Wirkung einer Kraft F verschiebbar. In der Vorrichtung gemäss Fig. 3 und 4 wird der erste zusätzliche Formteil 14 nach dem Schliessen des Formhohlraums durch den Hydraulik-kolben 15 bis in eine vorbestimmte Endlage verschoben, um das Volumen des Formhohlraums zu verkleinern, bis der Kunststoff den ganzen Formhohlraum vollständig ausfüllt. Die vorbestimmte Endlage ist im Ausführungsbeispiel dadurch gegeben, dass ein Bund 21 auf dem zusätzlichen Formteil 14 an einer Gegenfläche 22 (Fig. 3) an der Matrize 11 anschlägt.

Der zweite zusätzliche Formteil 20, der durch den Druck des Kunststoffs 13, welcher durch das Bewegen des ersten zusätzlichen Formteils 14 erzeugt wird, entgegen der Wirkung der Kraft F verschoben wird, dient dem Volumenausgleich, das heisst, das Endvolumen des Formhohlraums passt sich genau an die Grösse der eingegebenen Kunststoffportion an. Der im Formhohlraum erzeugte Enddruck des Kunststoffs 13 ist durch die Grösse der Kraft F festgelegt.

Durch die vorbestimmte Endlage des in der Matrize 11 verschiebbaren ersten zusätzlichen Formteils 14 wird eine genau vorbestimmte äussere Form der gebildeten Verschlusskappe sichergestellt, unabhängig von allfälligen Abweichungen der Grösse der eingegebenen Kunststoffportion von einer Sollgrösse.

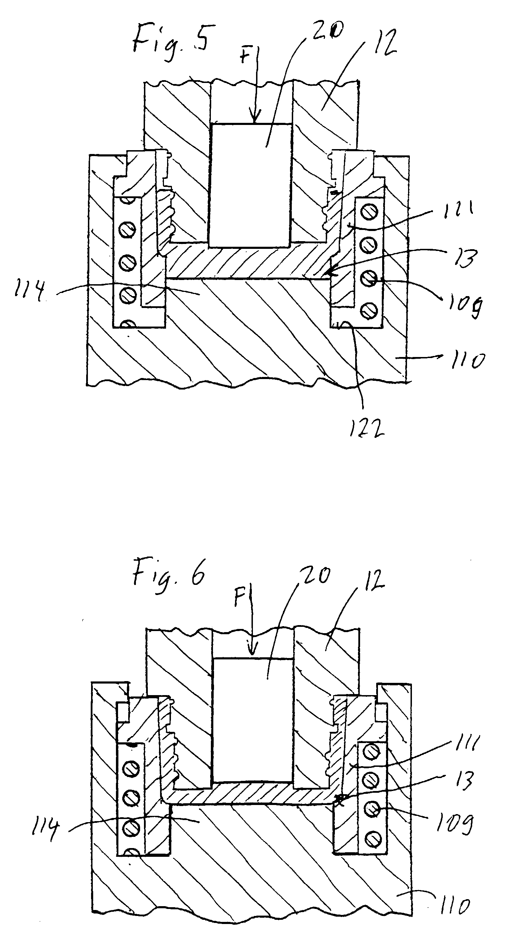

Die Vorrichtung gemäss den Fig. 5 und 6 enthält wieder den im Stempel 12 entgegen der Wirkung der Kraft F verschiebbaren zweiten zusätzlichen Formteil 20. Der Stempel 12 und eine Matrize 111 sind bezüglich einander axial bewegbar. In der dargestellten geschlossenen Stellung liegt ein Umfangsteil des Stempels 12 auf einem oberen Rand der Matrize 111 auf, der Stempel und die Matrize begrenzen zwischen einander einen Formhohlraum in der Form einer Behälterverschlusskappe. Die Matrize 111 ist axial verschiebbar in einem Halterungsteil 110 gehalten und bezüglich des Halterungsteils durch eine Druckfeder 109 in die in Fig. 5 gezeigte Endlage federbelastet.

Ein in die Matrize 111 hineinragender zylindrischer Vorsprung 114 des Halterungsteils 110 bildet einen ersten zusätzlichen Formteil. Die Matrize 111 bzw. der darin gebildete Formhohlraum und der zusätzliche Formteil 114 sind bezüglich einander entgegen der Wirkung der Feder 109 axial verschiebbar, um das Volumen des Formhohlraums zu verkleinern, bis der Kunststoff 13 wie in Fig. 6 gezeigt den ganzen Formhohlraum vollständig ausfüllt. Dieses Verschieben erfolgt dadurch, dass die nicht dargestellten Mittel, welche zum Schliessen des Formhohlraums den Umfangsteil des Stempels 12 auf den oberen Rand der Matrize 111 drücken, den Stempel und die Matrize und damit den Formhohlraum gemeinsam weiter in den Halterungsteil 110 hineinschieben. Nach dem Verschieben haben der Formhohlraum und der erste zusätzliche Formteil 114 bezüglich einander eine vorbestimmte Endlage (Fig. 6), welche im Ausführungsbeispiel dadurch gegeben ist, dass ein unterer Rand der Matrize 111 an einer Gegenfläche 122 im Halterungsteil 110 anschlägt.

Die Aufgabe und Wirkung des zweiten zusätzlichen Formteils 20 sind in der Vorrichtung gemäss Fig. 5 und 6 gleich wie in der Vorrichtung gemäss Fig. 3 und 4.

## Patentansprüche

1. Verfahren zum Pressformen einer Behälterverschlusskappe, welche einen ersten Teil (16, 17) und einen zweiten Teil (18) aufweist, die durch wenigstens einen dünneren Abschnitt (19) miteinander verbunden sind, gekennzeichnet durch folgende Schritte:
- Bereitstellen einer Form mit einer Matrize (11; 111) und einem Stempel (12), die bezüglich einander bewegbar sind, um zwischen einander einen Formhohlraum einzuschliessen, der einen ersten Hohlraumteil zum Bilden des ersten Teils (16, 17) der Verschlusskappe, einen zweiten Hohlraumteil zum Bilden des zweiten Teils (18) der Verschlusskappe und einen Hohlraumzwischenteil zum Bilden des dünneren Abschnittes (19) aufweist,
- Eingeben einer Kunststoffportion in die Matrize (11; 111),
- Bewegen der Matrize (11; 111) und des Stempels (12) bezüglich einander zum Schliessen des Formhohlraums,
- Bewegen eines zusätzlichen Formteils (14; 114) bezüglich des Formhohlraums derart, dass das Volumen des Formhohlraums verkleinert wird und ein Teil der Kunststoffportion aus dem ersten Hohlraumteil durch den Hohlraumzwischenteil in den zweiten Hohlraumteil gedrückt wird, um den dünneren Abschnitt (19) und den zweiten Teil (18) der Verschlusskappe zu bilden.

2. Verfahren nach Anspruch 1, zum Pressformen einer Behälterverschlusskappe, in welcher der erste Teil (16, 17) einen Boden und eine Umfangswand bildet und der zweite Teil (18) ein ringförmiges Element bildet.

3. Einrichtung zum Pressformen einer Behälterverschlusskappe, welche einen ersten Teil (16, 17) und einen zweiten Teil (18) aufweist, die durch wenigstens einen dünneren Abschnitt (19) miteinander verbunden sind, gekennzeichnet durch eine Matrize (11; 111) und einen Stempel (12), die bezüglich einander bewegbar sind, um zwischen einander einen Formhohlraum einzuschliessen, der einen ersten Hohlraumteil zum Bilden des ersten Teils (16, 17) der Verschlusskappe, einen zweiten Hohlraumteil zum Bilden des zweiten Teils (18) der Verschlusskappe und einen Hohlraumzwischenteil zum Bilden des dünneren Abschnittes (19) aufweist, und einen zusätzlichen Formteil (14; 114), der nach dem Schliessen des Formhohlraums bezüglich des Formhohlraums bewegbar ist, um das Volumen des Formhohlraums zu verkleinern und Kunststoff (13) aus dem ersten Hohlraumteil durch den Hohlraumzwischenteil in den zweiten Hohlraumteil zu drücken, bis der Kunststoff (13) den Formhohlraum vollständig ausfüllt.

4. Einrichtung nach Anspruch 3, dadurch gekennzeichnet, dass der erste Hohlraumteil zum Formen eines Bodens (16) und einer Umfangswand (17) der Verschlusskappe ausgebildet ist und der zweite Hohlraumteil zum Formen eines ringförmigen Elementes (18) der Verschlusskappe ausgebildet ist.

5. Einrichtung nach Anspruch 4, dadurch gekennzeichnet, dass der zweite Hohlraumteil zum Formen eines Garantiebandes (18) ausgebildet ist und der Hohlraumzwischenteil zum Formen einer Sollbruchlinie (19) zwischen der Umfangswand (17) und dem Garantieband (18) ausgebildet ist.

6. Einrichtung nach einem der Ansprüche 3 bis 5, gekennzeichnet durch einen zweiten zusätzlichen Formteil (20), der nach dem vollständigen Ausfüllen des Formhohlraums durch den Druck des Kunststoffs (13) verschiebbar ist.

7. Einrichtung nach Anspruch 6, dadurch gekennzeichnet, dass der erstgenannte zusätzliche Formteil (14; 114) nach dem Schliessen des Formhohlraums bis in eine vorbestimmte Endlage bewegbar ist.

8. Einrichtung nach Anspruch 6 oder 7, dadurch gekennzeichnet, dass der erstgenannte zusätzliche Formteil (14; 114) in der Matrize (11; 111) axial verschiebbar ist und der zweite zusätzliche Formteil (20) im Stempel (12) axial verschiebbar ist.
